# EUROPÄISCHE PATENTSCHRIFT

(11) **EP 1 058 039 B1**
(45) Veröffentlichungstag und Bekanntmachung des Hinweises auf die Patenterteilung: **02.11.2005**
(21) Anmeldenummer: 00103298.6
(22) Anmeldetag: 18.02.2000
(51) Int. Cl.: F16L 3/00, H02G 3/06, D06F 39/08, A47L 9/24, F16L 43/02

(54) **Wellschlauch mit einer Halterung**
Corrugated pipe with mounting bracket
Tuyau ondulé avec bride de montage

(30) Priorität: 04.06.1999 DE 29909715 U
(43) Veröffentlichungstag der Anmeldung: 06.12.2000
(73) Patentinhaber: Anton Hummel Verwaltungs GmbH, 79183 Waldkirch (DE)
(72) Erfinder: Bartholomä, Mario, 79297 Winden (DE)
(74) Vertreter: Patent- und Rechtsanwaltssozietät Maucher, Börjes & Kollegen

(56) Entgegenhaltungen:
- EP-A- 0 575 218
- DE-U- 29 810 441
- US-A- 4 318 519
- US-A- 4 922 554
- PATENT ABSTRACTS OF JAPAN vol. 1997, no. 09, 30. September 1997 (1997-09-30) & JP 09 129049 A (YAZAKI CORP), 16. Mai 1997 (1997-05-16)

## Beschreibung

Die Erfindung betrifft einen Wellschlauch mit einer Halterung zum Fixieren des Wellschlauches in einer gegenüber einer Fortsetzung seiner Innenlängshöhlung winkligen Lage, wobei die Halterung formschlüssig an wenigstens einer zwischen in axialer Richtung nebeneinander liegenden Wellen angeordneten Vertiefung des Wellschlauches angreift, wobei die Halterung wenigstens zwei Schenkel aufweist und die Schenkel zur formschlüssigen Verbindung mit dem Wellschlauch ausgebildet sind und dieser in Gebrauchsstellung zwischen den Schenkeln einen gekrümmten Verlauf hat.

Ein derartiger Wellschlauch mit Halterung ist aus der US-A-4 318 519 bekannt. Die Halterung ist dabei aus Draht gebogen und an den Enden der über eine Krümmung verbundenen Schenkel sind Hakenteile einstückig angeformt, die zwei Drahtwindungen umfassen, damit sie eine Welle eines Wellschlauchs zwischen sich aufnehmen können. Sie müssen also sehr präzise geformt und gebogen sein. Die beiden Hakenöffnungen sind dabei einander zugewandt und haben eine Weite, die dem Durchmesser des Wellschlauchs im Bereich der Wellentäler entspricht, sodass der gekrümmte Wellschlauch in den Hakenöffnungen durch seine Elastizität gehalten wird und unter dynamischer Belastung gegebenenfalls aus einer derartigen Öffnung herausspringen könnte.

Es besteht deshalb die Aufgabe, einen Wellschlauch mit Halterung zu schaffen, der in seiner Halterung formschlüssig festgelegt ist, ohne dass es zusätzlicher Montagemaßnahmen bedarf. Dennoch soll der Wellschlauch auch lösbar gehalten werden können und es soll möglich sein, einen Wellschlauch mit einer Halterung an einem Gehäusedurchbruch zunächst von diesem wegführend festzulegen und ihm dann über eine Krümmung einen zu einer Gehäuseoberfläche parallelen oder unter einem anderen Winkel angeordneten Verlauf zu geben.

Zur Lösung dieser Aufgabe ist der eingangs genannte Wellschlauch mit einer Halterung dadurch gekennzeichnet, dass wenigstens einer der Schenkel zumindest eine seitlich offene Ausnehmung zum seitlichen Einrasten der Vertiefung des Wellschlauchs aufweist, wobei die seitliche Öffnung der Ausnehmung kleiner als der Außendurchmesser des Wellschlauches in einem Wellental ist, und dass die Dicke der Halterung im Bereich der Ausnehmung gleich oder kleiner als die axiale Abmessung eines Wellentales ist. Dadurch ist es möglich, den Wellschlauch von der Seite her in eine entsprechende Ausnehmung einzurasten, wodurch ein Wellental bzw. eine Vertiefung im Bereich dieser Ausnehmung zu liegen kommt und durch die beidseits angeordneten Wellen auch eine Zugentlastung erzielt wird. Da der Wellschlauch von der Seite her in die Ausnehmung eingerastet wird, ist er formschlüssig festgelegt, ohne dass es zusätzlicher Montagemaßnahmen bedarf. Entsprechend einfach ist die Montage.

Zweckmäßig ist es, wenn die Halterung ein Winkelstück mit zwei Schenkeln ist, die in einem spitzen, rechten oder stumpfen Winkel bis zu 180° zueinander angeordnet sind. Somit können beliebig lange Krümmungen und entsprechende Richtungsänderungen des Wellschlauches festgelegt werden. Dabei können auch halbkreisförmige Krümmungen und damit Richtungsänderungen um 180° bewirkt werden, wenn die beiden Schenkel in einem Winkel von 180° zueinander angeordnet sind. Sind sie in einem stumpfen oder rechten Winkel angeordnet, könnte auch eine größere Richtungsänderung bewirkt werden, wenn der Wellschlauch um die Außenseite dieses Winkelstückes verlegt und dann an den beiden Schenkeln befestigt wird.

Eine besonders einfache Ausführungsform der Halterung ergibt sich, wenn die Schenkel zum formschlüssigen Verbinden mit dem Wellschlauch jeweils wenigstens eine Ausnehmung, Lochung oder einen Durchbruch haben. An einer geschlossenen Lochung kann beispielsweise die Stirnseite eines Wellschlauches mit einer entsprechenden Kupplung oder Klemmvorrichtung angeschlossen werden.

Einfach ist die Montage vor allem auch dann, wenn beide Schenkel zumindest eine seitlich offene Ausnehmung zum seitlichen Einrasten der Vertiefung eines Wellschlauches aufweisen. Der Wellschlauch kann dann also an beiden Schenkeln auf die gleiche einfache Weise montiert werden. Ist eine der Ausnehmungen ein geschlossenes Loch mit umlaufenden Rand, kann dort das Ende des Wellschlauches mit einer Klemmvorrichtung festgelegt werden, beispielsweise mit gleichzeitiger Fixierung an einem Wanddurchbruch eines Gehäuses, so daß der Wellschlauch von der Oberseite dieses Gehäuses ausgehend über eine Krümmung durch den zweiten Schenkel in einer entsprechend gewünschten Richtung weiterverlaufen kann.

Die lichte Weite der seitlichen Öffnung der zum Einrasten des Wellschlauches dienenden Ausnehmung kann um einen Betrag kleiner als der Außendurchmesser des Wellschlauches in einem Wellental sein, um den der Wellschlauch in Richtung eines Durchmessers gegen die Elastizität seines Werkstoffes zusammendrückbar ist. Somit läßt sich der Wellschlauch bequem durch leichtes Zusammendrücken von der Seite her in eine Ausnehmung einführen und ist dann aufgrund der Rückstellkraft seiner Werkstoff-Elastizität formschlüssig festgelegt. Dennoch kann er auf gleiche Weise auch sehr einfach wieder demontiert werden.

Der Durchmesser der Ausnehmung oder der Ausnehmungen kann etwa dem Außendurchmesser des Wellschlauches im Bereich seines Wellentales entsprechen. Somit kann praktisch der gesamte Umfang der Vertiefung oder des Wellentales des Wellschlauches in Montagestellung von dem Innenrand der Ausnehmung erfaßt werden, was eine sichere Festlegung ergibt.

Zweckmäßig ist es, wenn in Einschubrichtung des Wellschlauches in eine mit einer seitlichen Öffnung versehene Ausnehmung vor dieser Öffnung ein von dem Außenrand des Schenkels zu der Öffnung führende Einführtrichter vorgesehen ist. Dies erleichtert dem Benutzer das seitliche Einführen des Wellschlauches in die Ausnehmung, wobei die radiale Zusammendrückung des Wellschlauches in diesem Bereich dann durch den Einführtrichter praktisch automatisch erfolgt.

Eine Ausgestaltung der Erfindung kann darin bestehen, daß beide Schenkel der Halterung jeweils zwei Ausnehmungen mit und/oder ohne seitliche Öffnung haben. Dadurch wird die Halterung geeignet, gleichzeitig zwei Wellschläuche zu fixieren oder aber einen Wellschlauch in unterschiedlichen Lagen zu halten.

Besonders günstig ist es, wenn die Halterung ein Winkel aus Blech, insbesondere aus Stahlblech ist. Sie kann dann praktisch einstückig hergestellt werden und stellt ein sehr preiswertes Teil dar, bei welchem auch die der axialen Abmessung eines Wellentales entsprechende Dicke durch entsprechende Blechwahl von vorneherein vorhanden sein kann.

Der Winkel zwischen den beiden Schenkeln der Halterung kann verstellbar, insbesondere bei einer einstückigen Verbindung der beiden Winkelschenkel durch eine Verbiegung verstellbar sein. Somit kann im Bedarfsfall die Winkelstellung der beiden Schenkel an einen speziellen Verlauf eines Wellschlauches angepaßt werden, falls dieser Verlauf von dem abweicht, was durch den jeweiligen Winkel zwischen beiden Schenkeln vorgegeben ist.

Wenigstens einer der Winkelschenkel kann über zumindest einen Teil seiner Oberfläche eben ausgebildet sein und dieser ebene Bereich kann als Befestigungsstelle zum Verankern der Halterung an einer Wandung oder Gehäuseoberfläche dienen. Dadurch kann ein Winkelschenkel eine zusätzliche Funktion erhalten und es ist nicht erforderlich, an der Halterung zusätzliche Verankerungsvorsprünge oder Flansche oder dergleichen vorzusehen. Dabei kann wenigstens einer der Schenkel - bevorzugt beide Schenkel - wenigstens eine Lochung oder Schraubenöffnung oder dergleichen Verformung zum Verankern der Halterung aufweisen. Neben den Ausnehmungen zur Aufnahme des Wellschlauches selbst genügt also ein weiteres Loch, um die Halterung funktionsfähig zu machen.

Die Schenkel der Halterung können verschieden lang sein und insbesondere der Schenkel mit einer eine seitliche Öffnung aufweisenden Ausnehmung kann länger als der andere Schenkel sein. Ist beispielsweise der eine Schenkel mit einer geschlossenen Ausnehmung zum Befestigen einer den Wellschlauch endseitig erfassenden Leitungseinführung oder Klemmvorrichtung versehen, kann der Wellschlauch zunächst damit formschlüssig an der Halterung befestigt werden. Danach wird er dann so gebogen, daß er in die seitliche Öffnung der Ausnehmung des zweiten Winkelschenkels eingerastet werden kann. Dabei ist es hilfreich, wenn der die seitlich offene Ausnehmung aufweisende Schenkel etwas länger ist, um zu berücksichtigen, daß die Leitungseinführung oder Klemmvorrichtung einen gewissen Platzbedarf hat und in diesem Bereich eine Krümmung des Wellschlauches nicht erfolgen kann.

Vor allem bei Kombination einzelner oder mehrerer der vorbeschriebenen Merkmale und Maßnahmen ergibt sich ein Wellschlauch mit Halterung, der sehr einfach in gekrümmter Lage festgelegt und montiert werden kann und zwar entweder an Wanddurchbrüchen oder Gehäuseöffnungen oder aber auch an einer anderen Stelle seines Verlaufes.

Nachstehend sind Ausführungsbeispiele der Erfindung anhand der Zeichnung näher beschrieben. Es zeigt in zum Teil schematisierter Darstellung:
- Fig.1: eine hinsichtlich der Halterung im Längsschnitt gehaltene Seitenansicht eines Wellschlauches mit Halterung, wobei ein Ende des Wellschlauches mittels einer Klemmverschraubung abgedichtet an der Halterung und einer Wandung, an welcher die Halterung mit einem Schenkel anliegt, befestigt ist,
- Fig.2: in schaubildlicher Darstellung die Halterung gemäß Figur 1,
- Fig.3: eine der Figur 1 entsprechende Darstellung, bei welcher der Wellschlauch im Bereich der Wandbefestigung oder Wanddurchführung nicht abgedichtet ist,
- Fig.4: die Halterung des Wellschlauches gemäß Figur 3, wobei diese winkelförmige Halterung an beiden Winkelschenkeln Ausnehmungen mit seitlichen Öffnungen zum seitlichen Einklipsen des Wellschlauches hat und die Öffnungen der Ausnehmungen nach derselben Seite hin gerichtet sind,
- Fig.5: eine Halterung gemäß Figur 4, wobei jedoch die seitlichen Öffnungen der Ausnehmungen nach entgegengesetzten Seiten gerichtet sind,
- Fig.6: eine als Winkel ausgebildete Halterung mit zwei Schenkeln, die jeweils zwei Ausnehmungen zum Fixieren von Wellschläuchen haben, wobei die Ausnehmungen des einen Schenkels geschlossen sind und die Ausnehmungen an dem anderen Schenkel nach entgegengesetzten Seiten gerichtete Öffnungen haben,
- Fig.7: eine Ausführungsform etwa gemäß Figur 6, bei der jedoch alle vier Ausnehmungen nach den Seiten gerichtete Öffnungen für ein Einklipsen von Wellschläuchen haben, sowie
- Fig.8 bis 11: schematisiert in Seitenansicht vier Halterungen mit unterschiedlichen Winkeln zwischen ihren Schenkeln, wobei ein rechter (Fig.8), ein spitzer (Fig.9), ein stumpfer (Fig.10) und ein Winkel von 180° (Fig.11) dargestellt sind.

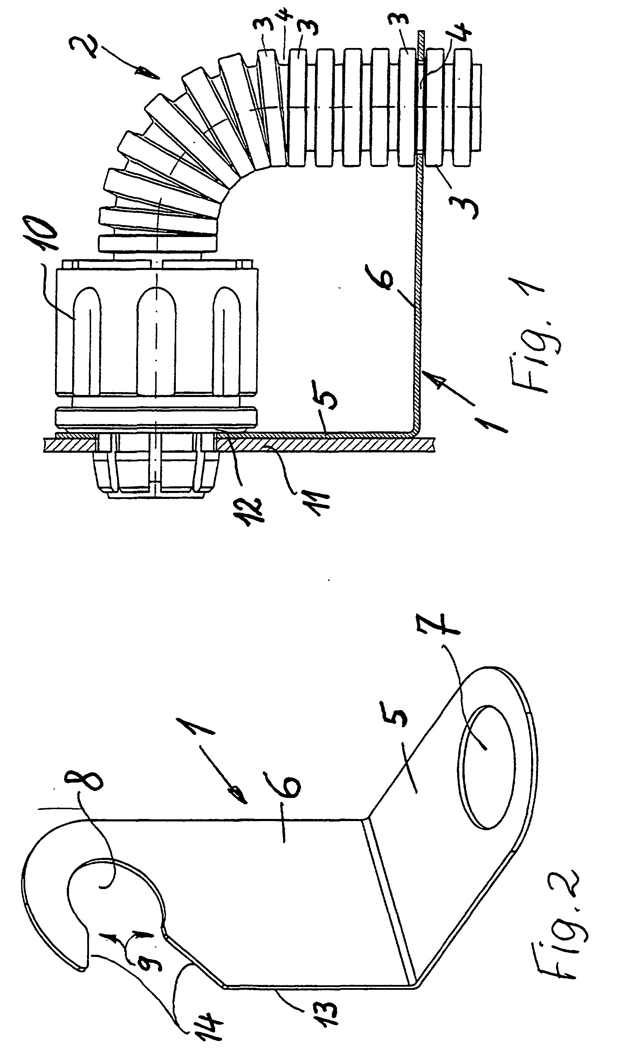

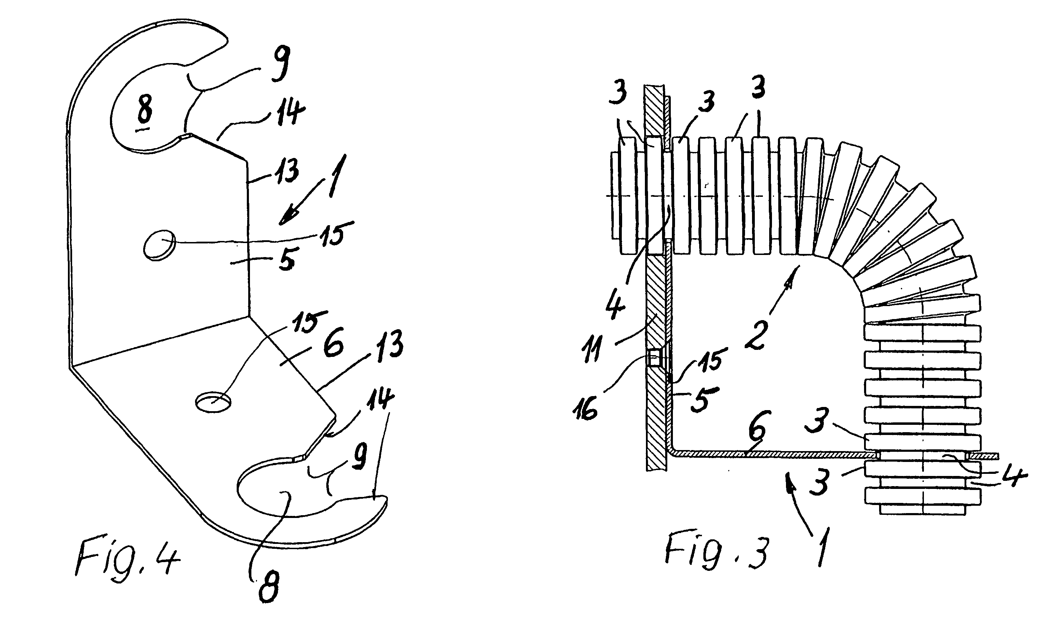

Eine im ganzen mit 1 bezeichnete Halterung dient zum Fixieren eines Wellschlauches 2 in einer gegenüber einer Fortsetzung seiner Innenlängshöhlung winkligen Lage, wobei die Halterung 1 gemäß den Figuren 1 und 3 formschlüssig an wenigstens einer zwischen in axialer Richtung nebeneinander liegenden Wellen 3 des Wellschlauches 2 angeordneten Vertiefung 4, also in einem Wellental des Wellschlauches 2 angreift.

In allen Ausführungsbeispielen erkennt man, daß die jeweils etwas abgewandelte Halterung 1 zwei Schenkel 5 und 6 aufweist, wobei diese Schenkel 5 und 6 in noch zu beschreibender Weise zur formschlüssigen Verbindung mit dem Wellschlauch 2 ausgebildet sind. Somit hat der Wellschlauch 2 gemäß Figur 1, 3 und 8 bis 11 in Gebrauchsstellung zwischen diesen Schenkeln 5 und 6 einen mehr oder weniger gekrümmten Verlauf, was aufgrund der Wellenform möglich ist.

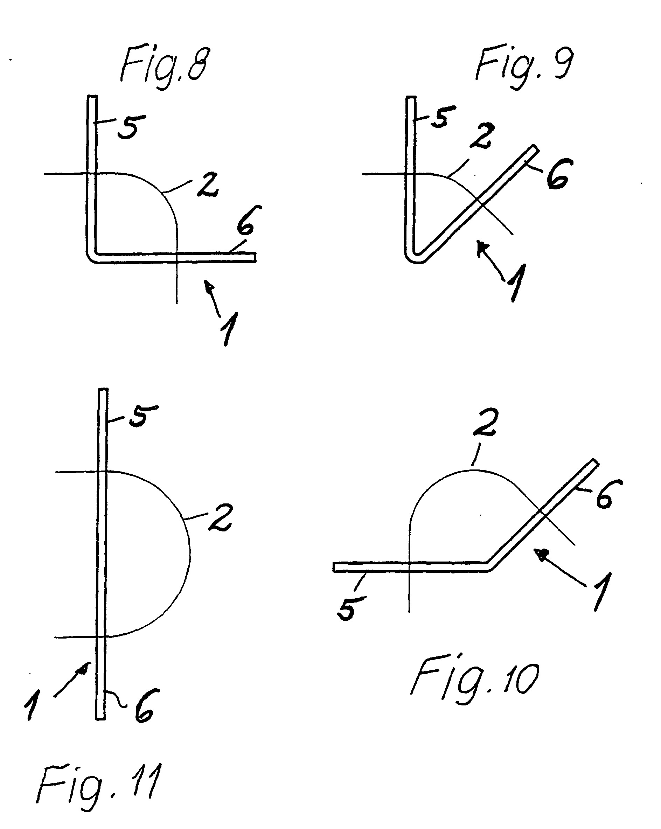

Die Halterung 1 ist dabei ein Winkelstück mit zwei Schenkeln 5 und 6, die gemäß Figur 9 in einem spitzen, gemäß Figur 1 bis 8 in einem rechten oder gemäß Figur 10 und 11 in einem stumpfen Winkel bis zu 180° zueinander angeordnet sein können. Figur 9 zeigt beispielsweise einen Winkel von 45°, der demgemäß zu einer Richtungsänderung des Wellschlauches 2 um etwa diesen Winkel führt, so daß die beiden Wellschlauchabschnitte selbst einen Winkel von 135° miteinander einschließen. Eine Halterung 1, deren Schenkel 5 und 6 gemäß Figur 10 unter einem Winkel von 135° angeordnet sind, führen zu einer Richtungsänderung um diesen Winkel, das heißt die Wellschlauchstücke selbst bilden einen Winkel von 45° miteinander.

Der häufigste Fall einer Halterung 1 mit zwei im rechten Winkel zueinander angeordneten Schenkeln 5 und 6 führt folgerichtig zu einer Richtungsänderung des Wellschlauches um 90°. Eine Umlenkung des Wellschlauch um 180° läßt sich mit zwei Winkel-Schenkel 5 und 6 erreichen, die unter 180° zueinander stehen, also sich praktisch fortsetzen, wie es Figur 11 zeigt.

Zum formschlüssigen Verbinden mit dem Wellschlauch 2 haben die Schenkel 5 und 6 jeweils wenigstens eine Ausnehmung 7 und 8, die auch eine Lochung oder ein sonstiger Durchbruch sein kann. Gemäß Figur 1 und 2 kann dabei einer der Schenkel, nämlich der Schenkel 6, gemäß Figur 3 bis 5 können auch beide Schenkel 5 und 6 jeweils eine seitlich offene Ausnehmung 8 zum seitlichen Einrasten der Vertiefung 4 eines Wellschlauches 2 aufweisen. Die seitliche Öffnung 9 der jeweiligen Ausnehmung 8 ist dabei geringfügig kleiner als der Außendurchmesser des Wellschlauches 2 in einem Wellental beziehungsweise einer Vertiefung 4 und gemäß Figur 1 und 3 ist die Dicke der Halterung 1 beziehungsweise ihres Schenkels 6 im Bereich dieser zwischen zwei Wellen 3 angeordneten Ausnehmung 8 gleich oder kleiner als die axiale Abmessung der Vertiefung 4 beziehungsweise eines Wellentales. Somit wird der Wellschlauch 2 sowohl in seitlicher als auch in axialer Richtung festgelegt und es ergibt sich an beiden Schenkeln 5 und 6 auch eine Zugentlastung. Die lichte Weite der seitlichen Öffnung 9 kann dabei um einen Betrag kleiner als der Außendurchmesser des Wellschlauches in einem Wellental 4 sein, um den der Wellschlauch 2 in Richtung eines Durchmessers gegen seine Elastizität beziehungsweise die Elastizität seines Werkstoffes zusammendrückbar ist. Somit läßt sich der Wellschlauch 2 etwas zusammendrücken und dann von der Seite her mit einer Vertiefung 4 durch die Öffnung 9 in die Ausnehmung 8 einführen. Da sich diese Zusammendrückung innerhalb der Elastizitätsgrenze befindet, federt er danach wieder in seine Ursprungslage zurück und ist nun innerhalb der Ausnehmung 8 trotz der seitlichen Öffnung 9 formschlüssig nach allen Seiten hin festgelegt. Er kann nur aus dieser Verbindung wieder gelöst und demontiert werden, in dem er erneut in radialer Richtung zusammengedrückt wird.

Dabei entspricht der Durchmesser der Ausnehmung 8 etwa dem Außendurchmesser des Wellschlauches 2 im Bereich seiner Wellentäler 4.

Figur 1 und 2 zeigt ein Ausführungsbeispiel bei welcher einer der Schenkel, nämlich der Schenkel 5 der Halterung 1 eine geschlossene Ausnehmung 7 zum Befestigen einer den Wellschlauch 2 endseitig erfassenden Leitungseinführung oder Klemmvorrichtung 10 aufweist, mit der gleichzeitig die Fixierung an einer Wandung 11 möglich ist, wobei diese Klemmvorrichtung oder Schraubverbindung 10 in vorteilhafterweise auch noch eine Abdichtung 12 aufweisen kann, so daß hier nicht nur die Befestigung an einer Wandung 11, sondern gleichzeitig auch eine Abdichtung der entsprechenden Öffnung erzielt werden kann.

In den Figuren 2 und 4 bis 7 erkennt man, daß in Einschubrichtung des Wellschlauches 2 von der Seite her in eine mit einer seitlichen Öffnung 9 versehene Ausnehmung 8 vor dieser Öffnung 9 ein von dem Außenrand 13 des jeweiligen Schenkels 5 und/oder 6 zu der Öffnung 9 führender Einführtrichter 14 vorgesehen ist, der das seitliche Einführen erleichtert und zu einer automatischen radialen Zusammendrückung des Wellschlauches 2 bei seiner Montage führt.

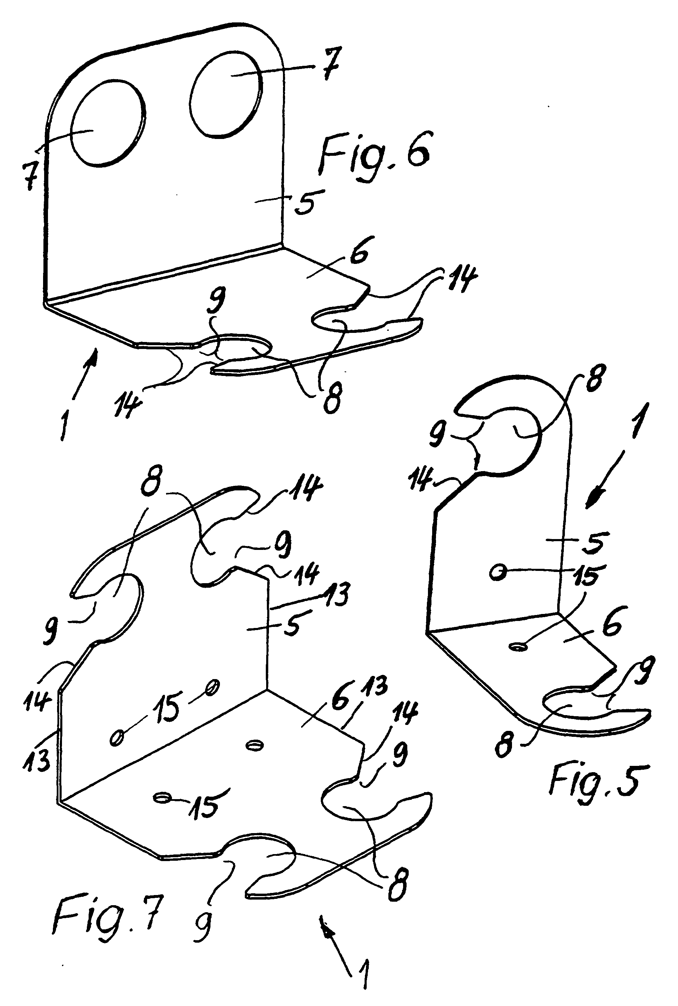

In den Figuren 6 und 7 sind Ausführungsbeispiele gezeigt, bei denen beide Schenkel 5 und 6 der Halterung 1 jeweils zwei Ausnehmungen 7 und/oder 8 mit und/oder ohne seitliche Öffnung 9 haben. Figur 6 zeigt dabei eine Ausführungsform bei welcher an dem Schenkel 5 zwei geschlossene Ausnehmungen 7 und an dem Schenkel 6 zwei nach entgegengesetzten Seiten offene Ausnehmungen 8 mit Öffnungen 9 und Einführtrichtern 14 vorgesehen sind.

Bei der Ausführungsform nach Figur 7 sind alle vier Ausnehmungen 8 an den Schenkeln 5 und 6 nach jeweils entgegengesetzten Seiten offen, haben also seitliche Öffnungen 9 und Einführtrichter 14. Somit lassen sich zwei Wellschläuche 2 parallel zueinander festlegen oder es kann ein Wellschlauch 2 wahlweise in unterschiedlichen Lagen und dabei gegebenenfalls sogar "diagonal" an einer solchen Halterung 1 lösbar fixiert werden. "Diagonal" bedeutet dabei, daß an den beiden Schenkeln 5 und 6 nicht die einander am nächsten liegenden Ausnehmungen, sondern jeweils den entgegengesetzten Rändern 13 nähere Ausnehmungen 7 und/oder 8 zur Befestigung eines solchen Wellschlauches 2 benutzt werden.

In allen Ausführungsbeispielen ist vorgesehen, daß die Halterung 1 ein Winkel aus Blech, insbesondere aus Stahlblech ist. Dadurch ist es möglich, daß der Winkel zwischen den beiden Schenkeln 5 und 6 der Halterung 1 verstellt werden kann, in dem bei der in allen Ausführungsbeispielen vorgesehenen einstückigen Verbindung die beiden Winkelschenkel 5 und 6 durch Verbiegung relativ zueinander verstellt werden können.

Normalerweise wird jedoch die Halterung 1 eine solche Festigkeit haben, daß eine gegenseitige Verbiegung der Schenkel 5 und 6 zumindest unter üblichen Belastungen praktisch ausgeschlossen ist.

Die Winkelschenkel 5 und 6 sind in den Ausführungsbeispielen jeweils an ihren Oberflächen eben ausgebildet und dieser ebene Bereich kann gemäß den Figuren 1 und 3 als Befestigungsstelle zum Verankern der Halterung 1 an der Wandung 11 oder einer Gehäuseoberfläche dienen. Dabei kann dies gemäß Figur 1 beispielsweise durch Verkleben oder eventuell sogar durch Verlöten oder Verschweißen erfolgen.

In den Ausführungsbeispielen gemäß Figur 3 bis 5 und 7 ist angedeutet, daß wenigstens einer der Schenkel 5 und/oder 6 zumindest eine Lochung 15 oder Schraubenöffnung oder dergleichen Verformung zur Verankerung der Halterung 1 beispielsweise mit Hilfe einer Befestigungsschraube 16 aufweisen kann. Dies erlaubt eine lösbare Befestigung der Halterung 1 an einer Wandung 11. Darüber hinaus stellt dies eine besonders einfache Art der Montage dar.

In Figur 1 und 2 ist noch angedeutet, daß die Schenkel 5 und 6 der Halterung 1 verschieden lang sein können, wobei in diesem Ausführungsbeispiel der Schenkel 6 mit einer eine seitliche Öffnung 9 aufweisenden Ausnehmung 8 länger als der andere Schenkel 5 ist. Dadurch kann berücksichtigt werden, daß der Wellschlauch 2 aufgrund der Klemmverschraubung oder Klemmvorrichtung 10 über einen Teil der Länge nicht verbiegbar ist, so daß die zwischen den beiden Schenkeln 5 und 6 befindliche Krümmung erst mit etwas Abstand von dem Schenkel 5 beginnen kann. Die größere Länge des Schenkels 6 berücksichtigt also den aufgrund der Klemmverschraubung oder Klemmvorrichtung 10 nicht verformbaren Längenbereich des Wellschlauches 2.

Zusammenfassend ergibt sich also ein Wellschlauch 2 mit einer Halterung 1, die den Wellschlauch 2 in einer gegenüber einer Fortsetzung seiner Innenlängshöhlung winkligen, das heißt gekrümmten Lage lösbar festlegt, wobei die Halterung 1 formschlüssig an vorstehend auch als Wellental 4 bezeichneten Vertiefungen 4 des Wellschlauches 2 angreift. Dabei hat die Halterung 1 zwei Schenkel 5 und 6, an denen der Wellschlauch 2 jeweils formschlüssig fixiert werden kann, so daß er in Gebrauchsstellung zwischen diesen Schenkeln 5 und 6 einen gekrümmten Verlauf hat. Wenigstens eine der formschlüssigen Verbindungen erfolgt dabei mittels einer seitlich offenen Ausnehmung 8, in die der Wellschlauch von der Seite her unter elastischer Verformung eingerastet werden kann.

## Patentansprüche

1. Wellschlauch (2) mit einer Halterung (1) zum Fixieren des Wellschlauches (2) in einer gegenüber einer Fortsetzung seiner Innenlängshöhlung winkligen Lage, wobei die Halterung (1) formschlüssig an wenigstens einer zwischen in axialer Richtung nebeneinander liegenden Wellen (3) angeordneten Vertiefung des Wellschlauches (2) angreift, wobei die Halterung (1) wenigstens zwei Schenkel (5, 6) aufweist und die Schenkel (5, 6) zur formschlüssigen Verbindung mit dem Wellschlauch (2) ausgebildet sind und dieser in Gebrauchsstellung zwischen den Schenkeln (5, 6) einen gekrümmten Verlauf hat, **dadurch gekennzeichnet, dass** wenigstens einer der Schenkel (6) zumindest eine seitlich offene Ausnehmung (8) zum seitlichen Einrasten der Vertiefung des Wellschlauches (2) aufweist, wobei die seitliche Öffnung (9) der Ausnehmung (8) kleiner als der Außendurchmesser des Wellschlauches (2) in einem Wellental (4) ist, und dass die Dicke der Halterung (1) im Bereich der Ausnehmung (8) gleich oder kleiner als die axiale Abmessung eines Wellentales (4) ist.

2. Wellschlauch mit einer Halterung nach Anspruch 1, **dadurch gekennzeichnet, dass** die Halterung (1) ein Winkelstück mit zwei Schenkeln (5, 6) ist, die in einem spitzen, rechten oder stumpfen Winkel bis zu 180° zueinander angeordnet sind.

3. Wellschlauch mit einer Halterung nach Anspruch 1 oder 2, **dadurch gekennzeichnet, dass** die Schenkel (5, 6) zum formschlüssigen Verbinden mit dem Wellschlauch (2) jeweils wenigstens eine Ausnehmung (7, 8), Lochung oder einen Durchbruch haben.

4. Wellschlauch mit einer Halterung nach einem der Ansprüche 1 bis 3, **dadurch gekennzeichnet, dass** beide Schenkel (5, 6) zumindest eine seitlich offene Ausnehmung (8) zum seitlichen Einrasten der Vertiefung eines Wellschlauches (2) aufweisen.

5. Wellschlauch mit einer Halterung nach einem der Ansprüche 1 bis 4, **dadurch gekennzeichnet, daß** die lichte Weite der seitlichen Öffnung (9) um einen Betrag kleiner als der Außendurchmesser des Wellschlauches in einem Wellental (4) ist, um den der Wellschlauch (2) in Richtung eines Durchmessers gegen die Elastizität seines Werkstoffes zusammendrückbar ist.

6. Wellschlauch mit einer Halterung nach einem der Ansprüche 1 bis 5, **dadurch gekennzeichnet, daß** der Durchmesser der Ausnehmung (8) etwa dem Außendurchmesser des Wellschlauches (2) im Bereich seines Wellentales (4) entspricht.

7. Wellschlauch mit einer Halterung nach einem der Ansprüche 1 bis 6, **dadurch gekennzeichnet, daß** einer der Schenkel (5) der Halterung (1) wenigstens eine geschlossene Ausnehmung (7) zum Befestigen einer den Wellschlauch (2) endseitig erfassenden Leitungseinführung oder Klemmvorrichtung (10) aufweist.

8. Wellschlauch mit einer Halterung nach einem der vorstehenden Ansprüche, **dadurch gekennzeichnet, daß** in Einschubrichtung des Wellschlauches (2) in eine mit einer seitlichen Öffnung (9) versehene Ausnehmung (8) vor dieser Öffnung (9) ein von dem Außenrand (13) des Schenkels (5, 6) zu der Öffnung (9) führender Einführtrichter (14) vorgesehen ist.

9. Wellschlauch mit einer Halterung nach einem der Ansprüche 1 bis 8, **dadurch gekennzeichnet, daß** beide Schenkel (5, 6) der Halterung (1) jeweils zwei Ausnehmungen (7, 8)mit und/oder ohne seitliche Öffnung (9) haben.

10. Wellschlauch mit einer Halterung nach einem der Ansprüche 1 bis 9, **dadurch gekennzeichnet, daß** die Halterung (1) ein Winkel aus Blech, insbesondere aus Stahlblech ist.

11. Wellschlauch mit einer Halterung nach einem der Ansprüche 1 bis 10, **dadurch gekennzeichnet, daß** der Winkel zwischen den beiden Schenkeln (5, 6) der Halterung (1) verstellbar, insbesondere bei einer einstückigen Verbindung der beiden Winkelschenkel (5, 6) durch eine Verbiegung verstellbar ist.

12. Wellschlauch mit einer Halterung nach einem der Ansprüche 1 bis 11, **dadurch gekennzeichnet, daß** wenigstens einer der Winkelschenkel (5, 6) über zumindest einen Teil seiner Oberfläche eben ausgebildet ist und dieser ebene Bereich als Befestigungsstelle zum Verankern der Halterung (1) an einer Wandung (11) oder Gehäuseoberfläche dient.

13. Wellschlauch mit einer Halterung nach einem der Ansprüche 1 bis 12, **dadurch gekennzeichnet, daß** wenigstens einer der Schenkel (5, 6) eine Lochung (15) oder Schraubenöffnung oder dergleichen Verformung zur Verankerung der Halterung (1) aufweist.

14. Wellschlauch mit einer Halterung nach einem der vorstehenden Ansprüche, **dadurch gekennzeichnet, daß** die Schenkel (5, 6) der Halterung (1) verschieden lang sind und insbesondere der Schenkel (6) mit einer eine seitliche Öffnung (9) aufweisenden Ausnehmung (8) länger als der andere Schenkel (5) ist.

## Claims

1. Corrugated tube (2) with a mounting bracket (1) for fixing the corrugated tube (2) in an angled position relative to a continuation of its inner cavity, the bracket (1) engaging in interlocking manner on at least one depression arranged between axially adjacent corrugations (3) in the corrugated tube (2), the bracket (1) comprising at least two arms (5, 6) and the arms (5, 6) being designed for interlocking engagement with the corrugated tube (2) and the tube (2) extending in a curve between the arms (5, 6) in the position of use, **characterised in that** at least one of the arms (6) has at least one laterally open recess (8) for the lateral engagement of the depression of the dorrugated tube (2), the lateral opening (9) of the recess (8) being smaller than the outer diameter of the corrugated tube (2) in a corrugation valley (4), and **in that** the thickness of the bracket (1) in the region of the recess (8) is less than or equal to the axial dimension of a corrugation valley (4).

2. Corrugated tube with a mounting bracket according to claim 1, **characterised in that** the mounting bracket (1) is an angle member with two arms (5, 6) which are arranged at an acute, right or obtuse angle of up to 180° to one another.

3. Corrugated tube with a mounting bracket according to claim 1 or 2, **characterised in that** the arms (5, 6) each have a recess (7, 8), hole or opening for interlocking connection to the corrugated tube (2).

4. Corrugated tube with a mounting bracket according to one of claims 1 to 3, **characterised in that** the two arms (5, 6) have at least one laterally open recess (8) for the lateral engagement of the depression of a corrugated tube (2).

5. Corrugated tube with a mounting bracket according to one of claims 1 to 4, **characterised in that** the internal width of the lateral opening (9) is less than the outer diameter of the corrugated tube in a corrugation valley (4) by an amount by which the corrugated tube (2) can be compressed in the direction of its diameter counter to the elasticity of its material.

6. Corrugated tube with a mounting bracket according to one of claims 1 to 5, **characterised in that** the diameter of the recess (8) corresponds substantially to the outer diameter of the corrugated tube (2) in the region of its corrugation valley (4).

7. Corrugated tube with a mounting bracker according to one of claims 1 to 6, **characterised in that** one of the arms (5) of the bracket (1) has at least one closed recess (7) for the attachment of a line grip or clamping device (10) which grips the end of the corrugated tube (2).

8. Corrugated tube with a mounting bracket according to one of the preceding claims, **characterised in that** in the direction of insertion of the corrugated tube (2) into a recess (8) provided with a lateral opening (9) there is provided, in front of this opening (9), an insertion funnel (14) leading from the outer edge (13) of the arm (5, 6) to the opening (9).

9. Corrugated tube with a moun ting bracket according to one of claims 1 to 8, **characterised in that** the two arms (5, 6) of the bracket (1) each have two recesses (7, 8) with and/or without a lateral opening (9).

10. Corrugated tube with a mounting bracket according to one of claims 1 to 9, **characterised in that** the bracket (1) is an angle member made of sheet metal, particularly sheet steel.

11. Corrugated tube with a mounting bracket according to one of claims 1 to 10, **characterised in that** the angle between the two arms (5, 6) of the bracket (1) is adjustable, more particularly is adjustable by bending in the case of an integral connection of the two bracket arms (5, 6).

12. Corrugated tube with a mounting bracket according to one of claims I to 11, **characterised in that** at least one of the bracket arms (5, 6) is flat in construction over at least part of its surface and this flat part serves as a fixing point for anchoring the bracket (1) to a wall (11) or housing surface.

13. Corrugated tube with a mounting bracket according to one of claims I to 12, **characterised in that** at least one of the arms (5, 6) has a hole (15) or screw opening or similar shaped portion for anchoring the bracket (1).

14. Corrugated tube with a mounting bracket according to one of the preceding claims, **characterised in that** the arms (5, 6) of the bracket (1) are of different lengths and in particular the arm (6) with a recess (8) comprising a lateral opening (9) is longer than the other arm (5).

## Revendications

1. Tuyau souple ondulé (2) avec un support (1) pour immobiliser le tuyau souple ondulé (2) dans une position en angle par rapport à un prolongement de sa cavité longitudinale intérieure, sachant que le support (1) agit en engagement positif sur au moins un renfoncement du tuyau souple ondulé (2) qui est disposé entre des ondulations axialement voisines (3) juxtaposées en direction axiale, et sachant que le support (1) présente au moins deux branches (5, 6), que les branches (5, 6) sont conçues pour la liaison positive avec le tuyau souple ondulé (2) et que ce dernier possède en position d'utilisation une allure courbe entre les branches (5, 6), **caractérisé en ce qu'**au moins une (6) des branches présente au moins un évidement (8) latéralement ouvert pour y insérer latéralement par enclenchement le renfoncement du tuyau souple ondulé (2), l'ouverture latérale (9) de l'évidement (8) étant plus petite que le diamètre extérieur du tuyau souple ondulé (2) dans un creux d'ondulation (4), et **en ce que** l'épaisseur du support (1) dans la région de l'évidement (8) est inférieure ou égale à la dimension axiale d'un creux d'ondulation (4).

2. Tuyau souple ondulé avec un support selon la revendication 1, **caractérisé en ce que** le support (1) est une pièce angulaire à deux branches (5, 6) qui sont disposées l'une par rapport à l'autre sous un angle aigu, droit ou obtus, pouvant aller jusqu'à 180°.

3. Tuyau souple ondulé avec un support selon la revendication 1 ou 2, **caractérisé en ce que** les branches (5, 6) possèdent chacune au moins un évidement (7, 8), trou ou brèche pour la liaison positive avec le tuyau souple ondulé (2).

4. Tuyau souple ondulé avec un support selon l'une des revendications 1 à 3, **caractérisé en ce que** les deux branches (5, 6) présentent au moins un évidement (8) latéralement ouvert pour l'insertion latérale par enclenchement du renfoncement d'un tuyau souple ondulé (2).

5. Tuyau souple ondulé avec un support selon l'une des revendications 1 à 4, **caractérisé en ce que** la largeur de passage de l'ouverture latérale (9) est inférieure au diamètre extérieur du tuyau souple ondulé dans un creux d'ondulation (4) du montant duquel le tuyau souple ondulé (2) peut être diamétralement comprimé à l'encontre de l'élasticité de son matériau.

6. Tuyau souple ondulé avec un support selon l'une des revendications 1 à 5, **caractérisé en ce que** le diamètre de l'évidement (8) correspond approximativement au diamètre extérieur du tuyau souple ondulé (2) dans la région de son creux d'ondulation (4).

7. Tuyau souple ondulé avec un support selon l'une des revendications 1 à 6, **caractérisé en ce qu'**une (5) des branches du support (1) présente au moins un évidement fermé (7) pour la fixation d'une entrée de ligne ou d'un dispositif de serrage (10) embrassant terminalement le tuyau souple ondulé (2).

8. Tuyau souple ondulé avec un support selon l'une des revendications précédentes, **caractérisé en ce qu'**un cône d'introduction (14) menant du bord extérieur (13) de la branche (5, 6) à l'ouverture (9) est prévu avant l'ouverture (9) dans la direction d'insertion du tuyau souple ondulé (2) dans un évidement (8) pourvu d'une ouverture latérale (9).

9. Tuyau souple ondulé avec un support selon l'une des revendications 1 à 8, **caractérisé en ce que** les branches (5, 6) du support (1) possèdent chacune deux évidements (7, 8) avec et/ou sans ouverture latérale (9).

10. Tuyau souple ondulé avec un support selon l'une des revendications 1 à 9, **caractérisé en ce que** le support (1) est une équerre en tôle, en particulier en tôle d'acier.

11. Tuyau souple ondulé avec un support selon l'une des revendications 1 à 10, **caractérisé en ce que** l'angle entre les deux branches (5, 6) du support (1) est réglable, en particulier est réglable par flexion si les deux branches (5, 6) en angle sont reliées en une pièce.

12. Tuyau souple ondulé avec un support selon l'une des revendications 1 à 11, **caractérisé en ce qu'**au moins une des branches (5, 6) en angle est réalisée plane sur au moins une partie de sa surface, et cette région plane sert de point de fixation pour l'ancrage du support (1) sur une paroi (11) ou sur une surface de boîtier.

13. Tuyau souple ondulé avec un support selon l'une des revendications 1 à 12, **caractérisé en ce qu'**au moins une des branches (5, 6) présente un trou (15) ou une ouverture pour vis ou une déformation analogue pour l'ancrage du support (1).

14. Tuyau souple ondulé avec un support selon l'une des revendications précédentes, **caractérisé en ce que** les branches (5, 6) du support (1) sont de longueurs différentes et, en particulier, la branche (6) pourvue d'un évidement (8) présentant une ouverture latérale (9) est plus longue que l'autre branche (5).
